# EUROPEAN PATENT APPLICATION

(11) **EP 4 575 070 A1**
(43) Date of publication of application: **25.06.2025**
(21) Application number: 24199329.4
(22) Date of filing: 09.09.2024
(51) Int. Cl.: D06F 37/22, D06F 39/12, D06F 31/00

(54) **DRUM WASHING MACHINE**

(30) Priority: 19.12.2023 CN 202311753721
(71) Applicant: Beijing Xiaomi Mobile Software Co., Ltd., Beijing 100085 (CN)
(72) Inventor: LU, Dongsheng, Beijing, 100085 (CN); ZHANG, Qi, Beijing, 100085 (CN)
(74) Representative: Dehns Germany Partnerschaft mbB

(57) **Abstract**

A drum washing machine is provided. The drum washing machine includes a machine body (1), a suspension beam assembly (2), and a first drum (3). The machine body (1) includes a cabinet (11). The suspension beam assembly (2) is located in the cabinet (11), and includes a first reinforcement piece (21), a second reinforcement piece (22), and a suspension crossbeam (23). The first reinforcement piece (21) is connected to a first wall surface (111), and the second reinforcement piece (22) is connected to a second wall surface (112). Two ends of the suspension crossbeam (23) are respectively connected to the first reinforcement piece (21) and the second reinforcement piece (22). The first wall surface (111) and the second wall surface (112) are two opposite wall surfaces in the cabinet (11). The first drum (3) is connected to the suspension crossbeam (23).

## Description

### TECHNICAL FIELD

The present disclosure relates to the field of electrical appliance technology, in particular, to a drum washing machine.

### BACKGROUND

More users increasingly tend to wash different types of clothing separately nowadays. For example, the underwear and the outerwear are washed separately, the light colored clothing and the dark colored clothing are washed separately, and so on. A partitioned drum washing machine is thus widely favored due to the ability to wash different types of clothing simultaneously.

### SUMMARY

The present invention provides a drum washing machine. The drum washing machine includes a machine body including a cabinet; a suspension beam assembly located in the cabinet, wherein the suspension beam assembly includes a first reinforcement piece, a second reinforcement piece, and a suspension crossbeam, the first reinforcement piece is connected to a first wall surface, the second reinforcement piece is connected to a second wall surface, and two ends of the suspension crossbeam are respectively connected to the first reinforcement piece and the second reinforcement piece, and wherein the first wall surface and the second wall surface are two opposite wall surfaces in the cabinet; and a first drum connected to the suspension crossbeam.

Optionally, the first wall surface includes a first flanged structure and a second flanged structure arranged opposite to each other, and the second wall surface includes a third flanged structure and a fourth flanged structure arranged opposite to each other; and wherein two ends of the first reinforcement piece are respectively connected to the first flanged structure and the second flanged structure; and two ends of the second reinforcement piece are respectively connected to the third flanged structure and the fourth flanged structure.

Optionally, the first flanged structure and the second flanged structure are both perpendicular to the first wall surface and perpendicular to an axis of the first drum, and the third flanged structure and the fourth flanged structure are both perpendicular to the second wall surface and perpendicular to the axis of the first drum.

Optionally, the two ends of the first reinforcement piece are respectively riveted to the first flanged structure and the second flanged structure, the two ends of the second reinforcement piece are respectively riveted to the third flanged structure and the fourth flanged structure, and the two ends of the suspension crossbeam are respectively connected to the first reinforcement piece and the second reinforcement piece through bolts.

Optionally, stiffness of the suspension crossbeam is smaller than stiffness of the cabinet.

Optionally, the suspension crossbeam assembly further includes a first connection piece and a second connection piece; and wherein two ends of the first connection piece are respectively connected to the first reinforcement piece and one end of the suspension crossbeam through bolts; and two ends of the second connection piece are respectively connected to the second reinforcement piece and the other end of the suspension crossbeam through bolts.

Optionally, the first wall surface includes a fifth flanged structure, and a middle part of the first connection piece is recessed in a direction away from the fifth flanged structure to form an avoidance area; and wherein a distance between the first wall surface and an axis of the first drum is greater than a distance between the second wall surface and the axis of the first drum.

Optionally, the first drum includes an outer drum and an inner drum, the outer drum and the inner drum are arranged coaxially, and the outer drum is sleeved an outer ring of the inner drum and connected to the suspension crossbeam.

Optionally, the drum washing machine further includes a counterweight, wherein the counterweight is located in the cabinet and on a side of the suspension crossbeam close to the first drum, and the counterweight is connected to the suspension crossbeam through bolts.

Optionally, a distance from a mass center of the counterweight to the first wall surface is equal to a distance from the mass center of the counterweight to the second wall surface.

Optionally, the outer drum includes multiple connection seats, the connection seats have cylindrical structures, and the multiple connection seats are distributed in a matrix, and wherein the connection seats are provided with internal threaded holes, and the connection seats are connected to the suspension crossbeam through bolts.

Optionally, axes of the connection seats are perpendicular to an axis of the outer drum, and a line connecting top surfaces of the connection seats located on the same side of the axis of the outer drum is parallel to the axis of the outer drum, and wherein a distance between the line connecting the top surfaces of the connection seats located on a first side of the axis of the outer drum and the axis of the outer drum is equal to a distance between the line connecting the top surfaces of the connection seats located on a second side of the axis of the outer drum and the axis of the outer drum.

Optionally, external threads of the bolts and internal threads in the threaded holes on the connection seats are both fine threads, and rounded corners are provided at tooth roots of the threads.

Optionally, density of the counterweight is greater than density of the suspension crossbeam.

Optionally, the counterweight is provided with internal threaded holes, and external threads of the bolts and internal threads in the threaded holes on the counterweight are both fine threads, and rounded corners are provided at tooth roots of the threads.

It should be understood that the general description in the above and the detailed description in the following are only illustrative and explanatory, and cannot limit the present disclosure.

### BRIEF DESCRIPTION OF THE DRAWINGS

In order to provide a clearer explanation of technical solutions in embodiments of the present disclosure, a brief introduction to the drawings required in the description of embodiments of the present disclosure will be provided in the following. It is apparent that the drawings are only some of the embodiments of the present disclosure, and for those skilled in the art, other drawings can be obtained based on these drawings without creative efforts.
FIG. 1 is a schematic diagram of a structure of a drum washing machine according to embodiments of the present disclosure;
FIG. 2 is a schematic diagram of a structure of a drum washing machine according to embodiments of the present disclosure;
FIG. 3 is a schematic diagram of structures of a suspension beam assembly and a first drum according to embodiments of the present disclosure;
FIG. 4 is a schematic diagram of a part of a suspension beam assembly according to embodiments of the present disclosure; and
FIG. 5 is a schematic diagram of a structure of a drum washing machine according to embodiments of the present disclosure.

### Explanations of reference numerals

1. machine body;
11. cabinet; 12. accommodation space;
11a. first connection part; 11b. second connection part; 11c. third connection part;
111. first wall surface; 112. second wall surface;
1111. first flanged structure; 1112. second flanged structure; 1121, third flanged structure; 1122. fourth flanged structure; 1113. fifth flanged structure;
2. suspension beam assembly;
21. first reinforcement piece; 22. second reinforcement piece; 23. suspension crossbeam; 24. first connection piece; 25. second connection piece;
241. avoidance area;
3. first drum;
31. outer drum; 32. inner drum;
311. connection seat;
4. counterweight.

### DETAILED DESCRIPTION

In order to make the purposes, technical solutions, and advantages of the present disclosure clearer, detailed descriptions of embodiments of the present disclosure will be further provided in the following with reference to the drawings.

The technical or scientific terms used herein, unless otherwise defined, shall have the ordinary meanings as understood by those skilled in the art to which the present disclosure relates. The use of "first", "second", "third", and similar words in the specification and the claims of the present disclosure does not indicate any order, quantity or importance, but is only used to distinguish different components. Words like "one" or "a" do not indicate a quantity limit, but rather indicate the existence of at least one subject. Words like "include" or "contain" mean that elements or objects that appear before "include" or "contain" cover those and equivalents thereof listed after "include" or "contain", and do not exclude other elements or objects. Words like "connect" or "connecting" are not limited to physical or mechanical connections, but can include electrical connections, no matter direct connections or indirect connections. Words like "up", "down", "left", "right", etc., are only used to represent relative positional relationships. When absolute positions of the described objects change, the relative positional relationships may also change accordingly.

More users increasingly tend to wash different types of clothing separately, for example, the underwear and the outerwear are washed separately. Based on this demand, a partitioned drum washing machine has gradually become a mainstream choice. The partitioned drum washing machine includes a cabinet, a main drum, and an auxiliary drum. The main drum and the auxiliary drum are both arranged inside the cabinet. During operation, the main drum and the auxiliary drum of the washing machine can be operated simultaneously to wash different types of clothing. In order to meet the conventional laundry demands of the main drum, the size of the main drum is usually large, resulting in limited size inside the cabinet left for the auxiliary drum. Therefore, the auxiliary drum is usually connected with the cabinet through a suspension beam and is eccentrically arranged relative to the main drum. Such an arrangement causes the energy generated by the vibration of the auxiliary drum during operation to be transmitted to the cabinet through the suspension beam. In the long run, the cabinet will deform under the vibration of the auxiliary drum, and the fit between the cabinet and the ground becomes worse, resulting in sliding of the washing machine relative to the ground during operation and causing loud noise.

Embodiments of the present disclosure provide a drum washing machine. The drum washing machine includes a machine body 1, a suspension beam assembly 2, and a first drum 3.

In some embodiments, the machine body 1 includes a cabinet 11, and the suspension beam assembly 2 is located in the cabinet 11. The suspension beam assembly 2 includes a first reinforcement piece 21, a second reinforcement piece 22, and a suspension crossbeam 23. The first reinforcement piece 21 is connected to a first wall surface 111, and the second reinforcement piece 22 is connected to a second wall surface 112. Two ends of the suspension crossbeam 23 are respectively connected to the first reinforcement piece 21 and the second reinforcement piece 22. The first drum 3 is connected to the suspension crossbeam 23. The first wall surface 111 and the second wall surface 112 are two opposite wall surfaces in the cabinet 11.

According to embodiments of the present disclosure, the first reinforcement piece 21 and the second reinforcement piece 22 can absorb some of the energy generated by the vibration of the first drum 3 during operation, thereby reducing the amount of the energy transmitted to the cabinet 11. As a result, the cabinet 11 is less prone to deformation, the service life of the drum washing machine can be improved, and the noise can be reduced.

Each part of the drum washing machine will be introduced separately in the following.

### 1. Machine Body 1

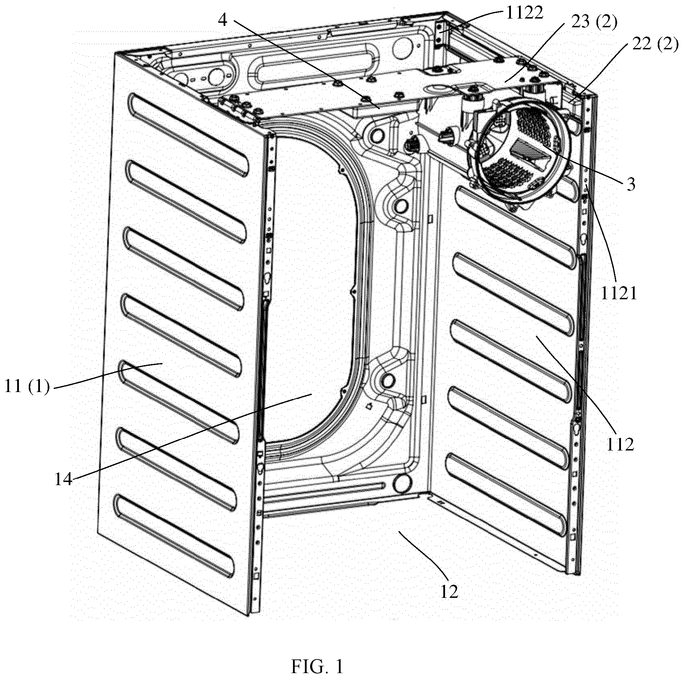

As shown in FIG. 1, the machine body 1 includes a cabinet 11, and the machine body 1 can also include a second drum (not shown).

### Cabinet 11

The cabinet 11 is a component configured in the machine body 1 to accommodate a first drum 3, a suspension beam assembly 2, and a second drum (not shown).

As shown in FIG. 1, the cabinet 11 is of a cubic structure, and has two opposite first wall surface 111 and second wall surface 112.

The cabinet 11 can be formed by riveting multiple rectangular wall plates together, or the cabinet 11 can be formed by welding the multiple rectangular wall plates together, or the cabinet 11 can be integrally formed through a stamping process. Embodiments of the present disclosure do not limit how the cabinet 11 is formed.

In some embodiments, as shown in FIG. 1, in the case where the cabinet 11 is formed by riveting multiple rectangular wall plates together, the multiple rectangular wall plates are arranged in a surrounding manner to form an accommodation space 12. The accommodation space 12 is configured to accommodate the suspension beam assembly 2, the first drum 3, and the second drum. In the case where the cabinet 11 is formed by riveting multiple rectangular wall plates, the first wall surface 111 and the second wall surface 112 are two opposite wall surfaces of two opposite wall plates.

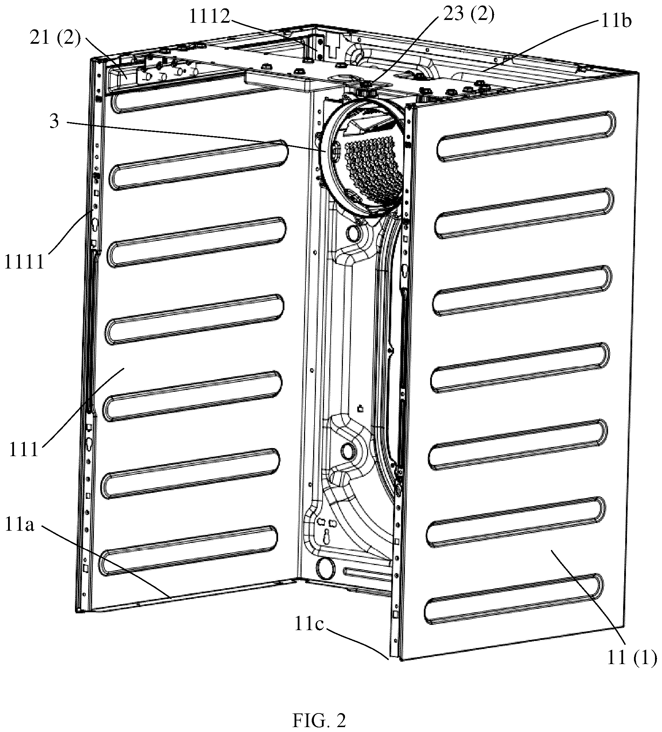

In some embodiments, as shown in FIG. 2, in the case where the cabinet 11 is integrally formed through the stamping process, the rectangular plate is stamped and bent on both sides to form the cabinet 11. The cabinet 11 includes a first connection part 11a, a second connection part 11b, and a third connection part 11c. The first connection part 11a and the third connection part 11c are both connected to the second connection part 11b, and the first connection part 11a and the third connection part 11c are arranged opposite to each other. In the case where the cabinet 11 is integrally formed through the stamping process, the first wall surface 111 and the second wall surface 112 are two opposite wall surfaces of the first connection part 11a and the third connection part 11c.

### Second Drum

In the case where the drum washing machine is a partitioned drum washing machine, the second drum serves as a main drum in the drum washing machine, and the first drum 3 can serve as an auxiliary drum in the drum washing machine. The second drum is located in the cabinet 11 and is connected to the cabinet 11.

In some embodiments, a distance from an axis of the second drum to the first wall surface 111 can be equal to a distance from the axis of the second drum to the second wall surface 112. In this way, the connection stability between the second drum and the cabinet 11 can be improved.

In some embodiments, the second drum can include an outer drum and an inner drum (both not shown). The outer drum and the inner drum both have cylindrical structures. The outer drum is sleeved on an outer ring of the inner drum in a surrounding manner and connected to the cabinet 11. The inner drum is connected to the outer drum in a rotatable manner, and is connected to an output shaft of a motor.

In some embodiments, when the motor is in operation, the output shaft of the motor rotates to drive the inner drum to rotate, thereby completing the washing of the clothing inside the inner drum.

### 2. Suspension Beam Assembly 2

The suspension beam assembly 2 is a component configured in the drum washing machine to suspend the first drum 3 and absorb the energy generated by the vibration of the first drum 3.

As shown in FIGS. 1 and 2, the suspension beam assembly 2 includes a first reinforcement piece 21, a second reinforcement piece 22, and a suspension crossbeam 23. The first reinforcement piece 21, the second reinforcement piece 22, and the suspension crossbeam 23 are all located in the cabinet 11. In some embodiments, the first reinforcement piece 21 is connected to the first wall surface 111, the second reinforcement piece 22 is connected to the second wall surface 112, and two ends of the suspension crossbeam 23 are respectively connected to the first reinforcement piece 21 and the second reinforcement piece 22.

In some embodiments, the first drum 3 is connected to the suspension crossbeam 23. The first drum 3 may generate vibration during operation, and the energy generated by the vibration is transmitted to the cabinet 11 via the suspension crossbeam 23 and the first reinforcement piece 21, or transmitted to the cabinet 11 via the suspension crossbeam 23 and the second reinforcement piece 22, or transmitted to the cabinet 11 via all of the three, the suspension crossbeam 23, the first reinforcement piece 21, and the second reinforcement piece 22. During the energy transmission process, both the first reinforcement piece 21 and the second reinforcement piece 22 will absorb some of the energy, which reduces the amount of the energy received by the cabinet 11 and makes it less likely for the cabinet 11 to deform. As a result, the service life of the drum washing machine can be improved and the noise can be reduced.

### 3. First Drum 3

In the case where the drum washing machine is a partitioned drum washing machine, the first drum 3 serves as the auxiliary drum in the drum washing machine. The first drum 3 is located in the cabinet 11 and is connected to the cabinet 11.

In some embodiments, the first drum 3 includes an outer drum 31 and an inner drum 32.

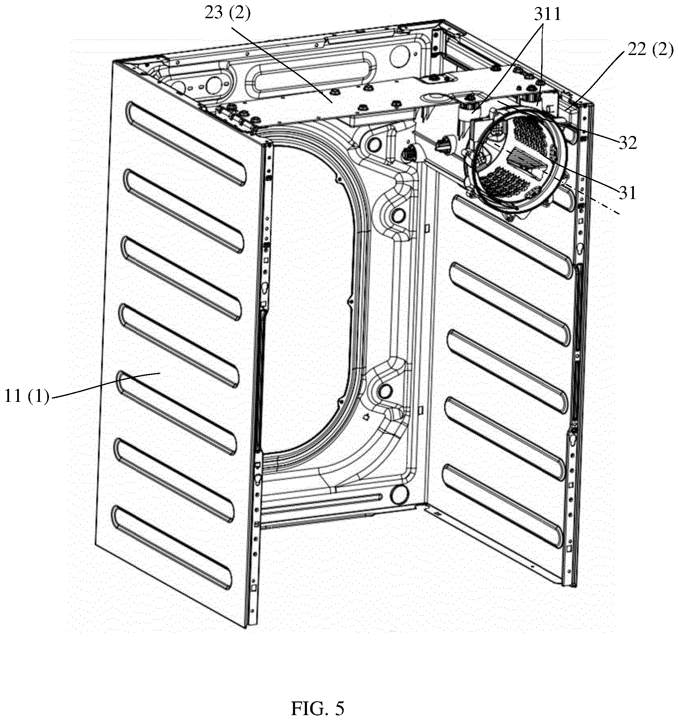

As shown in FIG. 5, the first drum 3 includes the outer drum 31 and the inner drum 32. The outer drum 31 and the inner drum 32 are arranged coaxially. The outer drum 31 is connected to the suspension crossbeam 23, the inner drum 32 is located on an inner ring of the outer drum 31 and connected to the outer drum 31.

In some embodiments, the inner drum 32 is rigidly connected to the output shaft of the motor. When the motor is in operation, the output shaft rotates to drive the inner drum 32 to rotate, thereby completing the washing of the clothing inside the inner drum 32.

In some embodiments, the outer drum 31 is connected to the suspension crossbeam 23 through bolts.

As shown in FIG. 5, the outer drum 31 has a cylindrical structure. An outer wall of the outer drum 31 has multiple connection seats 311. The connection seats 311 have cylindrical structures, and axes of the connection seats 311 are perpendicular to an axis of the outer drum 31. The connection seats 311 are provided with internal threaded holes.

In some embodiments, as shown in FIG. 5, the outer wall of the outer drum 31 is provided with four connection seats 311, and the four connection seats 311 are distributed in a matrix. Two of the four connection seats 311 are located on one side of the axis of the outer drum 31, and the other two connection seats 311 are located on the other side of the axis of the outer drum 31. Each of the connection seats 311 is provided with an internal threaded hole.

In some embodiments, a line connecting top surfaces of the two connection seats 311 located on the same side of the axis of the outer drum 31 can be parallel to the axis of the outer drum 31, and the distance from the line connecting top surfaces of the two connection seats 311 located on a first side of the axis of the outer drum 31 to the axis of the outer drum 31 can be equal to the distance from the line connecting top surfaces of the two connection seats 311 located on a second side of the axis of the outer drum 31 to the axis of the outer drum 31.

In some embodiments, the suspension crossbeam 23 is provided with four through holes, which are distributed in a matrix and correspond to positions of the four connection seats 3 11 on the outer wall of the outer drum 31.

In some embodiments, the connection seats 311 on the outer drum 31 is in contact with a lower wall of the suspension crossbeam 23, and bolts pass through the through holes mentioned above and are threaded with the threaded holes on the connection seats 311 to achieve a detachable connection between the outer drum 31 and the suspension crossbeam 23.

In this way, the connection stability between the first drum 3 and the suspension crossbeam 23 can be improved.

In some embodiments, the external thread of the bolt and the internal thread in the threaded hole on the connection seats 311 can be both fine threads, and a rounded corner is provided at the tooth root of the thread.

In this way, stress concentration at the tooth root can be reduced. Further, there is a load between the outer drum 31 and the suspension crossbeam 23 due to the vibration of the inner drum 32 under the drive of the motor, by providing the internal thread as the fine thread, good self-locking performance under the load can be enabled between the outer drum 31 and the suspension crossbeam 23, which prevents the outer drum 31 from shaking relative to the suspension crossbeam 23 and generating noise.

In some embodiments, a washer can be provided between the bolt head of the above bolt and the suspension crossbeam 23. The material of the washer can be plastic or rubber, and embodiments of the present disclosure do not limit this.

In this way, the connection stability between the outer drum 31 and the suspension crossbeam 23 can be improved.

In some embodiments, some wall surfaces of the cabinet 11 are provided with flanged structures.

As shown in FIGS. 1 and 2, the first wall surface 111 of the cabinet 11 has a first flanged structure 1111 and a second flanged structure 1112 arranged opposite to each other, and the second wall surface 112 has a third flanged structure 1121 and a fourth flanged structure 1122 arranged opposite to each other.

In some embodiments, two ends of the first reinforcement piece 21 are respectively connected to the first flanged structure 1111 and the second flanged structure 1112, and two ends of the second reinforcement piece 22 are respectively connected to the third flanged structure 1121 and the fourth flanged structure 1122.

In this way, the first reinforcement piece 21 is no longer directly connected to the first wall surface 111 of the cabinet, but is connected to the first flanged structure 1111 and the second flanged structure 1112 arranged on the first wall surface 111. The first flanged structure 1111 and the second flanged structure 1112 can also absorb the energy generated, thereby reducing the amount of the energy transmitted to the first wall surface 111, and the first wall surface 111 is less prone to deformation. Also, the second reinforcement piece 22 is no longer directly connected to the second wall surface 112 of the cabinet, but is connected to the third flanged structure 1121 and the fourth flanged structure 1122 arranged on the second wall surface 112. The third flanged structure 1121 and the fourth flanged structure 1122 can absorb the energy generated, thereby reducing the amount of the energy transmitted to the second wall surface 112, and the second wall surface 112 is less prone to deformation. Both the first wall surface 111 and the second wall surface 112 in the cabinet 11 are less prone to deformation. As a result, the cabinet can maintain its original shape unchanged under the vibration, the fit between the cabinet 11 and the ground is good throughout the operation, and the washing machine will not slide relative to the ground during operation, thereby reducing noise.

In some embodiments, two ends of the first reinforcement piece 21 are respectively riveted to the first flanged structure 1111 and the second flanged structure 1112, and two ends of the second reinforcement piece 22 are respectively riveted to the third flanged structure 1121 and the fourth flanged structure 1122.

In this way, the connection stability between the first reinforcement piece 21 and the flanged structures can be improved, and the connection stability between the second reinforcement piece 22 and the flanged structures can also be improved.

In some embodiments, two ends of the suspension crossbeam 23 are connected respectively to the first reinforcement piece 21 and the second reinforcement piece 22 through bolts.

In some embodiments, the suspension crossbeam 23 is used to suspend the first drum 3, which is prone to deformation in the long run. By providing the connection between the suspension crossbeam 23, the first reinforcement piece 21 and the second reinforcement piece 22 using bolts, the efficiency of disassembling the suspension crossbeam 23 can be improved.

In some embodiments, the flanged structures can be perpendicular to the wall surfaces of the cabinet 11.

As shown in FIG. 2, the first flanged structure 1111 and the second flanged structure 1112 are both perpendicular to the first wall surface 111. As shown in FIG. 1, the third flanged structure 1121 and the fourth flanged structure 1122 are both perpendicular to the second wall surface 112.

In this way, the difficulty in manufacturing the flanged structures can be reduced.

The flanged structure can be shaped or formed through stamping process, and embodiments of the present disclosure do not limit the methods for manufacturing the flanged structures.

In some embodiments, the first flanged structure 1111 and the second flanged structure 1112 can be both perpendicular to the axis of the first drum 3, and the third flanged structure 1121 and the fourth flanged structure 1122 can be both perpendicular to the axis of the first drum 3.

For the first wall surface 111, in the case of high vibration of the first drum 3, the first reinforcement piece 21, the first flanged structure 1111, and the second flanged structure 1112 may deform. For the second wall surface 112, in the case of high vibration of the first drum 3, the second reinforcement piece 22, the third flanged structure 1121, and the fourth flanged structure 1122 may deform. Since the first flanged structure 1111 and the second flanged structure 1112 are distributed along the axial direction of the first drum 3, and since the third flanged structure 1121 and the fourth flanged structure 1122 are also distributed along the axial direction of the first drum 3, two edges of the first wall surface 111 located along the axial direction of the first drum 3 may move close to or away from the first drum 3, and similarly, two edges of the second wall surface 112 located along the axial direction of the first drum 3 may move close to or away from the first drum 3. In this way, two edges of the first wall surface 111 and the second wall surface 112 along a vertical direction will not move or move by a small amount, so that the fit between the cabinet 11 and the ground is always good, and thus the washing machine is less likely to slide relative to the ground during operation, thereby reducing the noise.

In some embodiments, the suspension beam assembly 2 can further include a first connection piece 24 and a second connection piece 25.

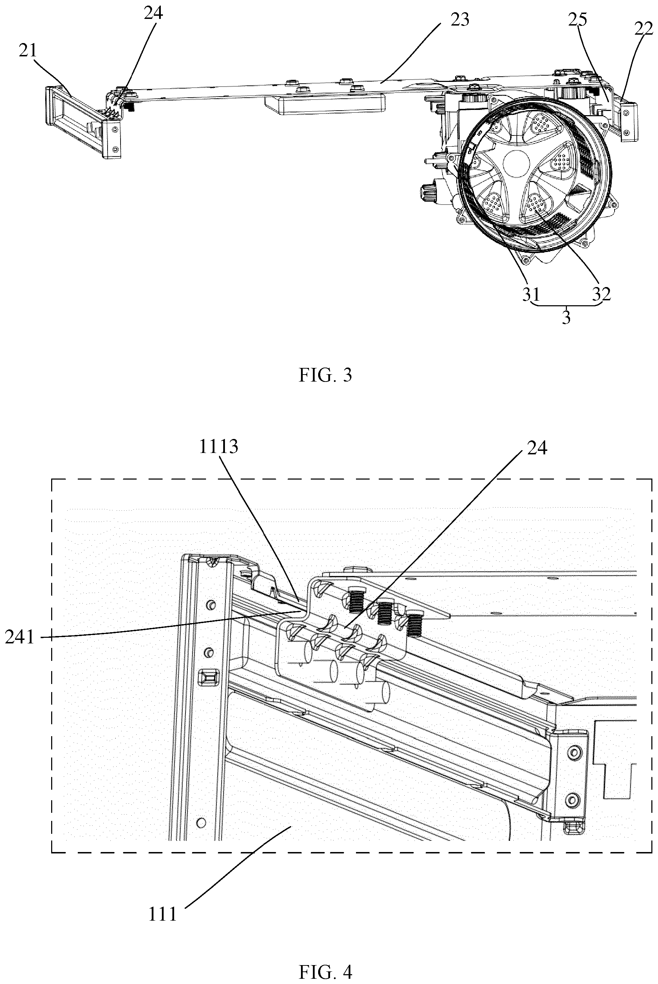

As shown in FIG. 3, two ends of the first connection piece 24 are respectively connected to the first reinforcement piece 21 and one end of the suspension crossbeam 23 through bolts. Two ends of the second connection piece 25 are respectively connected to the second reinforcement piece 22 and the other end of the suspension crossbeam 23 through bolts.

As shown in FIG. 3, the first connection piece 24 has a stepped plate-like structure. One end of the first connection piece 24 is attached to the suspension crossbeam 23, and the other end of the first connection piece 24 is attached to the first reinforcement piece 21. The second connection piece 25 also has a stepped plate-like structure. One end of the second connection piece 25 is attached to the suspension crossbeam 23, and the other end of the second connection piece 25 is attached to the second reinforcement piece 22.

In some embodiments, one end of the first connection piece 24 is connected to the suspension crossbeam 23 through bolts, the other end of the first connection piece 24 is connected to the first reinforcement piece 21 through bolts, one end of the second connection piece 25 is connected to the suspension crossbeam 23 through bolts, and the other end of the second connection piece 25 is connected to the second reinforcement piece 22 through bolts.

In this way, the difficulty in manufacturing the suspension crossbeam 23 can be reduced.

In some embodiments, the first wall surface 111 has a fifth flanged structure 1113. Two ends of the fifth flanged structure 1113 are respectively connected to the first flanged structure 1111 and the second flanged structure 1112.

As shown in FIG. 4, a middle part of the first connection piece 24 is recessed towards a direction away from the fifth flanged structure 1113 to form an avoidance area 241. A distance between the first wall surface 111 and the axis of the first drum 3 is greater than a distance between the second wall surface and the axis of the first drum 3.

In some embodiments, due to the fact that the axial direction of the first drum 3 is parallel to the first wall surface 111 and the second wall surface 112, and the distance between the axis of the first drum 3 and the first wall surface 111 is greater than the distance between the axis of the first drum 3 and the second wall surface 112, the first wall surface 111 is subjected to a higher moment from the first drum 3, and compared to the second wall surface 112, the first wall surface 111 is more prone to deformation.

According to embodiments of the present disclosure, the structural strength of the first flanged structure 1111 and the second flanged structure 1112 can be improved while fully utilizing the space inside the drum washing machine.

In some embodiments, the stiffness of the suspension crossbeam 23 is smaller than the stiffness of the cabinet 11.

In some embodiments, the amplitude of the vibration transmitted to the cabinet 11 from the first drum 3 is related to natural frequencies of connecting components between the first drum 3 and the cabinet 11, and the natural frequency is positively correlated with the stiffness of the connecting component between the two. That is, the greater the stiffness of the suspension crossbeam 23 is, the greater the amplitude of the vibration transmitted to the cabinet 11 from the first drum 3 is, and the smaller the stiffness of the suspension crossbeam 23 is, the smaller the amplitude of the vibration transmitted to the cabinet 11 from the first drum 3 is. Therefore, by providing the stiffness of the suspension crossbeam 23 to be smaller than the stiffness of the cabinet 11, the amplitude of the vibration transmitted to the cabinet 11 from the first drum 3 can be reduced, thereby reducing the overall vibration amplitude of the washing machine.

In some embodiments, the drum washing machine also includes a counterweight 4.

As shown in FIG. 1, the counterweight 4 has a cubic structure. The counterweight 4 is located in the cabinet 11, on a side of the suspension crossbeam 23 close to the first drum 3, and is connected to the suspension crossbeam 23 through bolts.

In this way, it is equivalent that the mass of the suspension crossbeam 23 is increased. In some embodiments, the amplitude of the vibration transmitted to the cabinet 11 from the first drum 3 is related to natural frequencies of connecting components between the first drum 3 and the cabinet 11, and the natural frequency is negatively correlated with the stiffness of the connecting component between the two. That is, the greater the mass of the suspension crossbeam 23 is, the smaller the amplitude of the vibration transmitted to the cabinet 11 from the first drum 3 is, and the smaller the mass of the suspension crossbeam 23 is, the greater the amplitude of the vibration transmitted to the cabinet 11 from the first drum 3 is. Therefore, by adding a counterweight 4 to the suspension crossbeam 23, the mass of the suspension crossbeam 23 is equivalent to be increased, the amplitude of the vibration transmitted to the cabinet 11 from the first drum 3 can be reduced, thereby reducing the overall vibration amplitude of the washing machine and the noise.

In some embodiments, the counterweight 4 can be provided with threaded holes, and the threaded holes are provided with internal threads.

In some embodiments, the internal threads can be fine threads. The tooth shape of the fine thread can be an equilateral triangle, and a rounded corner is provided at the tooth root of the thread.

In this way, stress concentration at the tooth root can be reduced. Further, there is a load between the counterweight 4 and the suspension crossbeam 23 due to the vibration of the first drum 3, by providing the internal thread as the fine thread, good self-locking performance under the load can be enabled between the counterweight 4 and the suspension crossbeam 23, which prevents the external counterweight 4 from shaking relative to the suspension crossbeam 23 and generating noise.

The depth of the threaded hole can be smaller than the thickness of the counterweight 4, and the number of threaded holes can be multiple. The threaded holes are located on the wall surface of the counterweight 4 close to the suspension crossbeam 23. The suspension crossbeam 23 is provided with multiple through holes, and positions of the multiple through holes correspond to positions of the threaded holes. The bolt heads of the bolts are located on a side of the suspension crossbeam 23 away from the counterweight 4 and is in contact with the suspension crossbeam 23.

In some embodiments, the bolts can pass through the through holes and are inserted into the threaded holes, and the fixed connection between the counterweight 4 and the suspension crossbeam 23 is achieved through the engagement between the external threads on the outer walls of the bolts and the internal threads on the inner walls of the threaded holes.

In this way, the difficulty in the assembly of the counterweight 4 and the suspension crossbeam 23 can be reduced.

In some embodiments, the counterweight 4 can be provided with through holes for connection, and the number of the through holes can be multiple. The suspension crossbeam 23 is provided with multiple through holes, and positions of the through holes of the counterweight 4 and the suspension crossbeam 23 correspond to each other.

In some embodiments, one end of the bolt can sequentially pass through the through holes in the suspension crossbeam 23 and in the counterweight 4, so that the bolt head presses against the wall surface of the suspension crossbeam 23 on the side away from the counterweight 4, and the nut is assembled with one end of the bolt to achieve the fixed connection between the counterweight 4 and the suspension crossbeam 23.

In this way, the cost for manufacturing the counterweight 4 is reduced.

In some embodiments, the counterweight 4 can have a cubic structure, and a distance from a mass center of the counterweight 4 to the first wall surface 111 is equal to a distance from the mass center of the counterweight 4 to the second wall surface 112.

In some embodiments, the density of the counterweight 4 can be greater than the density of the suspension crossbeam 23.

In some embodiments, the material of the suspension crossbeam 23 can be ultra hard aluminum, and the material of the counterweight 4 can be industrial pure iron.

In this way, the stiffness of the suspension crossbeam 23 can be reduced, and the mass of the counterweight 4 can be increased, thereby reducing the natural frequency of the suspension crossbeam 23 and reducing the overall vibration amplitude of the washing machine and the noise.

The technical solutions provided by embodiments of the present disclosure include at least the following beneficial effects.

Embodiments of the present disclosure provide a drum washing machine. In the drum washing machine, the machine body 1 includes a cabinet 11. A suspension beam assembly 2 is located in the cabinet 11. The suspension beam assembly 2 includes a first reinforcement piece 21, a second reinforcement piece 22, and a suspension crossbeam 23. The first reinforcement piece 21 is connected to a first wall surface 111, and the second reinforcement piece 22 is connected to a second wall surface 112. Two ends of the suspension crossbeam 23 are respectively connected to the first reinforcement piece 21 and the second reinforcement piece 22. A first drum 3 is connected to the suspension crossbeam 23. The first wall surface 111 and the second wall surface 112 are two opposite wall surfaces in the cabinet 11. In this way, the first reinforcement piece 21 and the second reinforcement piece 22 can absorb some of the energy generated by the vibration of the first drum 3 during operation, thereby reducing the amount of the energy transmitted to the cabinet 11, and making it less likely for the cabinet 11 to deform, which can improve the service life of the drum washing machine and reduce the noise.

The above description is only embodiments of the present disclosure and is not intended to limit the present disclosure. Any modifications, equivalent substitutions, improvements, etc. made within the spirit and the principle of the present disclosure should be included within the protection scope of the present disclosure.

## Claims

1. A drum washing machine, **characterized by** comprising:
a machine body (1) comprising a cabinet (11);
a suspension beam assembly (2) located in the cabinet (11), wherein the suspension beam assembly (2) comprises a first reinforcement piece (21), a second reinforcement piece (22), and a suspension crossbeam (23), the first reinforcement piece (21) is connected to a first wall surface (111), the second reinforcement piece (22) is connected to a second wall surface (112), and two ends of the suspension crossbeam (23) are respectively connected to the first reinforcement piece (21) and the second reinforcement piece (22), and wherein the first wall surface (111) and the second wall surface (112) are two opposite wall surfaces in the cabinet (11); and
a first drum (3) connected to the suspension crossbeam (23).

2. The drum washing machine according to claim 1, wherein the first wall surface (111) comprises a first flanged structure (1111) and a second flanged structure (1112) arranged opposite to each other, and the second wall surface (112) comprises a third flanged structure (1121) and a fourth flanged structure (1122) arranged opposite to each other; and
wherein two ends of the first reinforcement piece (21) are respectively connected to the first flanged structure (1111) and the second flanged structure (1112); and
two ends of the second reinforcement piece (22) are respectively connected to the third flanged structure (1121) and the fourth flanged structure (1122).

3. The drum washing machine according to claim 2, wherein the first flanged structure (1111) and the second flanged structure (1112) are both perpendicular to the first wall surface (111) and perpendicular to an axis of the first drum (3), and
the third flanged structure (1121) and the fourth flanged structure (1122) are both perpendicular to the second wall surface (112) and perpendicular to the axis of the first drum (3).

4. The drum washing machine according to claim 2 or 3, wherein the two ends of the first reinforcement piece (21) are respectively riveted to the first flanged structure (1111) and the second flanged structure (1112), the two ends of the second reinforcement piece (22) are respectively riveted to the third flanged structure (1121) and the fourth flanged structure (1122), and the two ends of the suspension crossbeam (23) are respectively connected to the first reinforcement piece (21) and the second reinforcement piece (22) through bolts.

5. The drum washing machine according to any of claims 1 to 4, wherein stiffness of the suspension crossbeam (23) is smaller than stiffness of the cabinet (11).

6. The drum washing machine according to any of claims 1 to 5, wherein the suspension crossbeam assembly (2) further comprises a first connection piece (24) and a second connection piece (25); and
wherein two ends of the first connection piece (24) are respectively connected to the first reinforcement piece (21) and one end of the suspension crossbeam (23) through bolts; and
two ends of the second connection piece (25) are respectively connected to the second reinforcement piece (22) and the other end of the suspension crossbeam (23) through bolts.

7. The drum washing machine according to claim 6, wherein the first wall surface (111) comprises a fifth flanged structure (1113), and a middle part of the first connection piece (24) is recessed in a direction away from the fifth flanged structure (1113) to form an avoidance area (241); and
wherein a distance between the first wall surface (111) and an axis of the first drum (3) is greater than a distance between the second wall surface (112) and the axis of the first drum (3).

8. The drum washing machine according to any of claims 1 to 7, wherein the first drum (3) comprises an outer drum (31) and an inner drum (32),
the outer drum (31) and the inner drum (32) are arranged coaxially, and the outer drum (31) is sleeved an outer ring of the inner drum (32) and connected to the suspension crossbeam (23).

9. The drum washing machine according to any of claims 1 to 8, further comprising a counterweight (4), wherein the counterweight (4) is located in the cabinet (11) and on a side of the suspension crossbeam (23) close to the first drum (3), and the counterweight (4) is connected to the suspension crossbeam (23) through bolts.

10. The drum washing machine according to claim 9, wherein a distance from a mass center of the counterweight (4) to the first wall surface (111) is equal to a distance from the mass center of the counterweight (4) to the second wall surface (112).

11. The drum washing machine according to any one of claims 8 to 10, wherein the outer drum (31) comprises multiple connection seats (311), the connection seats (311) have cylindrical structures, and the multiple connection seats (311) are distributed in a matrix, and wherein the connection seats (311) are provided with internal threaded holes, and the connection seats (311) are connected to the suspension crossbeam (23) through bolts.

12. The drum washing machine according to claim 11, wherein axes of the connection seats (311) are perpendicular to an axis of the outer drum (31), and a line connecting top surfaces of the connection seats (311) located on the same side of the axis of the outer drum (31) is parallel to the axis of the outer drum (31), and wherein a distance between the line connecting the top surfaces of the connection seats (311) located on a first side of the axis of the outer drum (31) and the axis of the outer drum (31) is equal to a distance between the line connecting the top surfaces of the connection seats (311) located on a second side of the axis of the outer drum (31) and the axis of the outer drum (31).

13. The drum washing machine according to claim 12, wherein external threads of the bolts and internal threads in the threaded holes on the connection seats (311) are both fine threads, and rounded corners are provided at tooth roots of the threads.

14. The drum washing machine according to any one of claims 9 to 13, wherein density of the counterweight (4) is greater than density of the suspension crossbeam (23).

15. The drum washing machine according to any one of claims 9 to 14, wherein the counterweight (4) is provided with internal threaded holes, and external threads of the bolts and internal threads in the threaded holes on the counterweight (4) are both fine threads, and rounded corners are provided at tooth roots of the threads.
